# EUROPEAN PATENT SPECIFICATION

(11) **EP 4 143 245 B1**
(45) Date of publication and mention of the grant of the patent: **25.06.2025**
(21) Application number: 21720547.5
(22) Date of filing: 28.04.2021
(51) Int. Cl.: C08F 220/14

(54) **COMPOSITION COMPRISING A COPOLYMER COMPRISING MONOMERS OF METHYL METHACRYLATE AND METHACRYLIC ACID, ITS USE AND MOULDED OBJECT**
ZUSAMMENSETZUNG ENTHALTEND EIN COPOLYMER AUS METHYLMETHACRYLAT- UND METHACRYLSÄUREMONOMEREN, DEREN VERWENDUNG UND FORMKÖRPER
COMPOSITION COMPRENANT UN COPOLYMÈRE COMPRENANT DES MONOMÈRES DE MÉTHACRYLATE DE MÉTHYLE ET D'ACIDE MÉTHACRYLIQUE, SON UTILISATION ET OBJET MOULÉ

(30) Priority: 30.04.2020 FR 2004328
(43) Date of publication of application: 08.03.2023
(73) Proprietor: Trinseo Europe GmbH, 8810 Horgen (CH)
(72) Inventor: QUERUEL, Sylvain, 27470 SERQUIGNY (FR); PIERRAT, Estelle, 27470 SERQUIGNY (FR)
(74) Representative: SSM Sandmair
(86) International application number: PCT/EP2021/061162
(87) International publication number: WO 2021/219738

(56) References cited:
- EP-A1- 3 181 602
- US-A1- 2018 258 272
- US-A1- 2019 367 721

## Description

### [Field of the invention]

The present invention relates to a polymeric composition suitable for making moulded objects that resists to chemicals, said composition is comprising a polymer comprising monomers of methyl methacrylate and methacrylic acid, its use, moulded object comprising and use of molded object.

In particular the present invention relates to the use of a polymeric composition suitable for making moulded objects that resists to chemicals, said polymeric composition is comprising monomers of methyl methacrylate and methacrylic acid, for making moulded objects and more particular solvent resistant moulded object.

The present invention concerns also process for making a solvent resistant moulded object comprising a polymer comprising monomers of methyl methacrylate and methacrylic acid.

The present invention concerns especially use of a polymer comprising monomers of methyl methacrylate and methacrylic acid for point of sales and a moulded object used for point of sales comprising a polymer comprising monomers of methyl methacrylate and methacrylic acid.

### [Technical problem]

Thermoplastic polymers and copolymers, especially (meth)acrylic ones, have excellent characteristics such as transparency, mechanical properties and processability and are widely used in various fields such as automobile parts, electrical parts, industrial parts, optical materials, various parts of household electrical appliances, aesthetical parts, miscellaneous goods and the like.

It is of great interest to have polymeric compositions based on (meth)acrylic polymers that have good properties in various fields or in other words an increased light transmittance, good scratch resistance.

Additionally it is of also of great interest to have a polymeric composition with better chemical resistance, especially solvent resistance. This can be achieved by adding certain compounds or make polymer blends. However adding polymer additives or blend several compounds has the drawback that other characteristics of the polymer are lost, as for example transparency, scratch resistance or clarity.

The objective of the present invention is to provide a (meth)acrylic polymer composition with satisfying solvent or chemical resistance.

A further objective of the present invention is to provide a (meth)acrylic polymer composition that can be used in solvent resistant applications.

A still further objective of the present invention is to provide a process for producing a molded object comprising a (meth)acrylic polymer composition with a satisfying solvent resistance.

Another objective of the present invention is to provide a (meth)acrylic polymer composition with satisfying solvent resistance, that comprises essentially no other compound as polymer additives of other polymers.

Another objective of the present invention is to provide a (meth)acrylic polymer composition that can be used in solvent resistant objects.

Another objective of the present invention is to provide process for making solvent resistant moulded or extruded objects that comprises a (meth)acrylic polymer.

Another objective of the present invention is to provide an object with satisfying solvent resistance comprising a (meth)acrylic polymer composition.

### [BACKGROUND OF THE INVENTION] Prior art

The document WO2018/054999 discloses a polymeric (meth)acrylic composition comprising a (meth)acrylic polymer and a copolymer comprising at least 41%wt of a vinyl aromatic monomer, (meth)acrylic acid ester monomer and dicarboxylic acid anhydride monomer for increasing the chemical resistance.

The prior art discloses a polymeric composition comprising a (meth)acrylic copolymer that is blended with another polymer. There is no polymer composition comprising in a copolymer monomers of methyl methacrylate and methacrylic acid in the prior art that does disclose anything about the chemical resistance or the use in chemical resistant applications or objects.

EP 3 181 602 A1 discloses a copolymer comprising a structural unit derived from a phosphonate monomer, a structural unit derived from a radical polymerizable monomer, and a structural unit derived from methyl methacrylate, the content of phosphorus atoms derived from the phosphonate monomer being not less than 1.0% by mass and less than 2.0% by mass relative to the mass of the copolymer, and a formed article comprising the copolymer.

US 2018/0258272 A1 discloses a copolymer demonstrating superior heat resistance, fluidity, mechanical properties, appearance, low water absorbency and moldability. In addition, US 2018/0258272 A1 discloses a process for producing a copolymer that enables the resulting copolymer to demonstrate superior heat resistance, fluidity, mechanical properties, appearance, low water absorbency and moldability. The copolymer is a copolymer containing 80 mol % or more of a methyl (meth)acrylate unit, wherein the Vicat softening temperature thereof is 115°C or higher, the saturated water absorption rate thereof at 60°C is 4% by weight or less, and the yellow index thereof is 1 or less. In addition, the process for producing a copolymer comprises the obtaining of a precursor by suspension polymerizing a monomer mixture containing 80 mol % or more of methyl (meth)acrylate and 0.7 mol % to 7 mol % of (meth)acrylic acid, followed by melting and kneading the resulting precursor with an extruder to obtain a copolymer containing 80 mol % or more of a methyl (meth)acrylate unit, 0.45 mol % to 7 mol % of a (meth)acrylic acid unit, and 0.001 mol % to 0.25 mol % of a glutaric anhydride unit.

US 2019/0367721 A1 discloses acid-functionalized copolymers of methyl methacrylate having relatively high glass transition temperatures and molecular weights being employed to manufacture articles having high light transmission values, low haze, high heat resistance, and high environmental stability, which are useful as optical protection films, zero-zero optical retardation films, and compensation films as well as lighting pipes and optical imaging lenses.

### [Brief description of the invention]

The invention is set out in the appended independent claims. The dependent claims describe advantageous embodiments.

Surprisingly it has been discovered that a polymeric composition (PC1) comprising a (meth)acrylic copolymer (MP1) comprising monomers of methyl methacrylate and methacrylic acid characterized in that the (meth)acrylic copolymer (MP1) has a weight average molecular weight Mw between 50 000 g/mol and 300 000g/mol and that the ratio of the monomeric units coming from methacrylic acid in said (meth)acrylic copolymer (MP1) is between 4wt% and 20wt%, increases the chemical resistance.

Surprisingly it has also been discovered that a polymeric composition (PC1) comprising a (meth)acrylic copolymer (MP1) comprising monomers of methyl methacrylate and methacrylic acid characterized in that the (meth)acrylic copolymer (MP1) has a weight average molecular weight Mw between 50 000 g/mol and 300 000g/mol and that the ratio of the monomeric units coming from methacrylic acid in said (meth)acrylic copolymer (MP1) is between 4wt% and 20wt%, can be used to increase the chemical resistance It has also been found that a polymeric composition (PC1) comprising a (meth)acrylic copolymer (MP1) comprising monomers of methyl methacrylate and methacrylic acid characterized in that the (meth)acrylic copolymer (MP1) has a weight average molecular weight Mw between 50 000 g/mol and 300 000g/mol and that the ratio of the monomeric units coming from methacrylic acid in said (meth)acrylic copolymer (MP1) is between 4wt% and 20wt%, can be used for making a moulded object having increased chemical resistance.

It has also been found that moulded object comprising a polymeric composition (PC1) comprising a (meth)acrylic copolymer (MP1) comprising monomers of methyl methacrylate and methacrylic acid characterized in that the (meth)acrylic copolymer (MP1) has a weight average molecular weight Mw between 50 000 g/mol and 300 000g/mol and that the ratio of the monomeric units coming from methacrylic acid in said (meth)acrylic copolymer (MP1) is between 4wt% and 20wt%; possesses increased chemical resistance.

### [Detailed description of the invention]

According to a first aspect, the present disclosure relates to a polymeric composition (PC1) suitable for making moulded objects that resist to chemicals, said composition comprises a (meth)acrylic copolymer (MP1) comprising monomers of methyl methacrylate and methacrylic acid characterized in that the (meth)acrylic copolymer (MP1) has a weight average molecular weight Mw between 50 000 g/mol and 300 000g/mol and that the ratio of the monomeric units coming from methacrylic acid in said (meth)acrylic copolymer (MP1) is between 4wt% and 20wt%.

According to a second aspect the present disclosure relates to the use of a polymeric composition (PC1) suitable for making moulded objects, said composition comprises a (meth)acrylic copolymer (MP1) comprising monomers of methyl methacrylate and methacrylic acid characterized in that the (meth)acrylic copolymer (MP1) has a weight average molecular weight Mw between 50 000 g/mol and 300 000g/mol and that the ratio of the monomeric units coming from methacrylic acid in said (meth)acrylic copolymer (MP1) is between 4wt% and 20wt% to increase the chemical resistance.

According to a third aspect the present disclosure relates to a moulded object comprising a polymeric composition (PC1), said composition comprises a (meth)acrylic copolymer (MP1) comprising monomers of methyl methacrylate and methacrylic acid characterized in that the (meth)acrylic copolymer (MP1) has a weight average molecular weight Mw between 50 000 g/mol and 300 000g/mol and that the ratio of the monomeric units coming from methacrylic acid in said (meth)acrylic copolymer (MP1) is between 4wt% and 20wt%.

According to a fourth aspect the present disclosure relates to the use of a polymeric composition (PC1) comprising a (meth)acrylic copolymer (MP1) comprising monomers of methyl methacrylate and methacrylic acid characterized in that the (meth)acrylic copolymer (MP1) has a weight average molecular weight Mw between 50 000 g/mol and 300 000g/mol and that the ratio of the monomeric units coming from methacrylic acid in said (meth)acrylic copolymer (MP1) is between 4wt% and 20wt%, for making a moulded objects with increased chemical resistance.

Still another aspect of the present disclosure is a moulded object in form of an assembled display stand made of a polymeric composition (PC1) comprising a (meth)acrylic copolymer (MP1) comprising monomers of methyl methacrylate and methacrylic acid characterized in that the (meth)acrylic copolymer (MP1) has a weight average molecular weight Mw between 50 000 g/mol and 300 000g/mol and that the ratio of the monomeric units coming from methacrylic acid in said (meth)acrylic copolymer (MP1) is between 4wt% and 20wt%.

An additional aspect of the present disclosure is the process for making a moulded object with increased chemical resistance by transforming a polymeric composition comprising a (meth)acrylic copolymer comprising monomers of methyl methacrylate and methacrylic acid, said process comprises the steps of
a) providing a polymeric composition (PC1) comprising a (meth)acrylic copolymer (MP1) comprising monomers of methyl methacrylate and methacrylic acid characterized in that the (meth)acrylic copolymer (MP1) has a weight average molecular weight Mw between 50 000 g/mol and 300 000g/mol and that the ratio of the monomeric units coming from methacrylic acid in said (meth)acrylic copolymer (MP1) is between 4wt% and 20wt%
b) transforming the polymeric composition (PC1)
c) assembling.

By the term "alkyl (meth)acrylate" as used is denoted to both alkyl acrylate and alkyl methacrylate.

By the term "copolymer" as used is denoted that the polymers consists of at least two different monomers.

By the term "parts" as used herein is denoted "parts by weight".

By the term "thermoplastic polymer" as used is denoted a polymer that turns to a liquid or becomes more liquid or less viscous when heated and that can take on new shapes by the application of heat and pressure.

By the term "PMMA" as used in the present invention are denoted copolymers of methylmethacrylate (MMA), for the copolymer of MMA the weight ratio of MMA inside the PMMA is at least 80 wt%.

By saying that a range from x to y in the present invention, it is meant that the upper and lower limit of this range are included, equivalent to at least x and up to y.

By the term "increased chemical resistance" is meant that the composition of the invention resist longer to exposure of chemicals, particularly liquid chemicals, compared to comparative compositions.

By saying that a range is between x and y in the present invention, it is meant that the upper and lower limit of this range are excluded, equivalent to more than x and less than y.

**With regard to the polymeric composition (PC1) suitable** for making moulded objects that resists to chemicals, said composition is comprising a (meth)acrylic copolymer (MP1) comprising monomers of methyl methacrylate and methacrylic acid. The (meth)acrylic copolymer (MP1) has a weight average molecular weight Mw between 50 000 g/mol and 300 000g/mol and that the ratio of the monomeric units coming from methacrylic acid in said (meth)acrylic copolymer (MP1) is between 4wt% and 20wt%.

In a first preferred embodiment the polymeric composition (PC1) comprises at least 80wt% of the (meth)acrylic copolymer (MP1). More preferably the polymeric composition (PC1) comprises at least 85wt% of the (meth)acrylic copolymer (MP1), still more preferably at least 90wt% of the (meth)acrylic copolymer (MP1), advantageously at least 95wt% of the (meth)acrylic copolymer (MP1) and most advantageously at least 96wt% of the (meth)acrylic copolymer (MP1). In the first preferred embodiment the polymeric composition (PC1) comprises from 80wt% to 100wt% of the (meth)acrylic copolymer (MP1), preferably the from 85wt% of to 100wt%, still more preferably from 90wt% to 100wt%, advantageously from 95wt% to 100wt% and most advantageously from 96wt% to 100wt% of the (meth)acrylic copolymer (MP1).

In a second preferred embodiment the polymeric composition (PC1) is the (meth)acrylic copolymer (MP1).

In a third preferred embodiment the polymeric composition (PC1) comprises less than 100wt% of the (meth)acrylic copolymer (MP1). More preferably the polymeric composition (PC1) comprises less than 99.99wt% of the (meth)acrylic copolymer (MP1), still more preferably less than 99.95wt% of the (meth)acrylic copolymer (MP1), advantageously less than 99.9wt% of the (meth)acrylic copolymer (MP1) and most advantageously less than 99.8wt% of the (meth)acrylic copolymer (MP1).

In a fourth preferred embodiment the polymeric composition (PC1) comprises less than 100wt% and more than 80wt% of the (meth)acrylic copolymer (MP1), more preferably less than 99.99wt% and more than 85wt%, still more preferably less than 99.95wt% and more than 90wt%, advantageously less than 99.9wt% and more than 96wt% and most advantageously less than 99.8wt% and more than 99wt%.

In a fifth preferred embodiment the polymeric composition (PC1) comprises at least 99wt% the (meth)acrylic copolymer (MP1).

According to the invention the (meth)acrylic copolymer (MP1) has a weight average molecular weight Mw between 60 000 g/mol and 100 000 g/mol.

By saying that the ratio of the monomeric units coming from methacrylic acid in said (meth)acrylic copolymer (MP1) is between 4wt% and 20wt%, is meant that the units can be still present in the copolymer as copolymerized monomers, but they do not have to. A part of the methacrylic acid units that have been copolymerized could be for example be dehydrated, and two neighboured methacrylic acid units could form an anhydride, for example a type of glutaric anhydride.

In one embodiment, at least 5% of the polymerized methacrylic acid units are transformed to anhydrides.

In another embodiment, at least 20% of the polymerized methacrylic acid units are transformed to anhydrides.

In still another embodiment, at least 0.5% of the polymerized methacrylic acid units are transformed to anhydrides.

Preferably between 0.5% and 50% of the polymerized methacrylic acid units in the (meth)acrylic copolymer (MP1) are transformed to anhydrides and more preferably between 5% and 50%.

The (meth)acrylic copolymer (MP1) comprises preferably at least 80wt% of methyl methacrylate and more preferably at least 85wt% of methyl methacrylate. The (meth)acrylic copolymer (MP1) comprises preferably at most 96wt% of methyl methacrylate and more preferably at most 95.5wt% of methyl methacrylate.

According to the invention the ratio of the monomeric units coming from methacrylic acid in said (meth)acrylic copolymer (MP1) is between 6.5wt% and 14wt%.

In a preferred embodiment the ratio of the monomeric units coming from methacrylic acid in said (meth)acrylic copolymer (MP1) is between 7wt% and 14wt%.

As said before the (meth)acrylic copolymer (MP1) comprises between 6.5wt% and 14wt% of the monomeric units coming from methacrylic acid in said (meth)acrylic copolymer (MP1). By this is meant that the polymerized methacrylic acid does not to have present as simple monomer unit in the polymeric chain anymore. It could happen that two methacrylic acid units form an anhydride unit. The part of anhydride units in the (meth)acrylic copolymer (MP1) is between 0 and 15wt%.

In a first preferred embodiment the ratio of anhydride units in said (meth)acrylic copolymer (MP1) is between 0.1wt% and 14wt%, more preferably between 0.2wt% and 12wt% and still more preferably between 0.3wt% and 10wt%.

In a second preferred embodiment the ratio of anhydride units in said (meth)acrylic copolymer (MP1) is between 5wt% and 14wt%.

In a third preferred embodiment the ratio of anhydride units in said (meth)acrylic copolymer (MP1) is between 0.5wt% and 14wt%.

According to the invention, preferred and advantageous embodiments for different respective characteristics of the (meth)acrylic copolymer (MP1) can be combined in any combination. As for example the preferred weight average molecular weight Mw of the (meth)acrylic copolymer (MP1) can be combined with preferred ratio of the monomeric units coming from methacrylic acid in said (meth)acrylic copolymer (MP1); or as for example the preferred weight average molecular weight Mw of the (meth)acrylic copolymer (MP1) can be combined with preferred the ratio of anhydride units in said (meth)acrylic copolymer (MP1) or contact angle of (meth)acrylic copolymer (MP1).

The (meth)acrylic copolymer (MP1) has a contact angle of at least 8°. The contact angle is measured with diethyl phthalate according to the method described in the experimental part.

In a first preferred embodiment the contact angle is between 8° and 20°.

In a second preferred embodiment the contact angle is between 9° and 20°.

In a third preferred embodiment the contact angle is between 9° and 17°.

According to an additional aspect the present invention concerns a process for making a moulded object comprising the step of transforming the polymeric composition (PC1) suitable for making moulded objects that resists to chemicals.

The transformation can be made by injection molding, extrusion, coextrusion or extrusion/blow molding. Preferably the transformation is made by injection or extrusion and more preferably by injection moulding.

The process for making a moulded object according to the invention comprises the steps of
- melting the polymeric composition (PC1) comprising a (meth)acrylic copolymer (MP1)
- injecting or extruding the molten composition.

In a first preferred embodiment the process for making a moulded object according to the invention comprises the steps of
- melting the polymeric composition (PC1) comprising a (meth)acrylic copolymer (MP1)
- injecting the molten composition into a mould
- applying pressure to the mould at least until the mould is completely filled with the molten composition.

According to a still further aspect the present invention concerns the use of the composition for making a moulded object.

The composition according to the invention can be transformed by injection molding, extrusion, coextrusion or extrusion/blow molding for the preparation of parts, profiled elements, sheets or films, for example, or for producing a moulded objet or an article.

According to a still further aspect the present invention concerns a moulded object made of the polymeric composition (PC1).

According to a still further aspect the present invention concerns the use of the polymeric composition (PC1) in a moulded object.

The moulded object of the invention can be in form of a sheet, block, film, tube or profiled element.

Examples for moulded objects or articles are light guides, lenses, automotive trims, parts of automotive rear and front lights, tail light, front covers, clusters, oven covers, home appliance parts, optical films, decorative films, capstock layers or containers.

According to a still further aspect the present invention concerns an object comprising the polymeric composition (PC1) or made of the polymeric composition (PC1). The object can be made directly or by assembling several moulded objects.

In a first preferred embodiment the objects are multilayer structures comprising a capstock layers, containers and point of sales.

In a second preferred embodiment the objects are display stands, notably cosmetic display stands; point of purchase displays, sign holders, boxes, risers, racks or showcases; cosmetic packaging.

### [Experimental Part]

### [Methods]

The molecular weight is measured by size exclusion chromatography (SEC). The chromatography column is calibrated with PMMA standards having a molecular weight between 402g/mol and 1 900 000 g/mol. The average molecular weight are expressed in g/mol for the number and average molecular weight Mn and Mw respectively. For the measurement the concentration is 1g/L.

The solvent resistance is measured in view of a cleaning solution as explained in the examples.

The contact angle is measured with an apparatus called DIGIDROP. As liquid diethyl phthalate is used. A drop of 1µl is put on the substrate by means of a syringe and a mobile platform and the profile of this drop is monitored by recording at least 6 pictures per second. A software which allows an automatic extraction of the contact angle is used. As the drop spreads relatively fast, the measurement is made only for 5 to 6 seconds and only the values during the first 4 seconds are evaluated and the value between 2 and 4 seconds is taken.

The optical properties of the polymers are measured according to following method: light transmittance is measured according to the standard ASTM D1003.

The vicat temperature of the polymers are measured according to norm ISO 306 method B50.

### [Examples]

The series of examples concern the use of different (meth)acrylic copolymers (MP1) in or as polymeric composition (PC1). Example 1 is a non-claimed example. Example 2 is an example according to the invention.

Following abbreviations are used for the monomers of the (meth)acrylic copolymers:
- MMA-: methyl methacrylate
- MAA -: methacrylic acid
- EA -: ethyl acrylate
- MA -: methyl acrylate

**Table 1 - Compositions of the respective (meth)acrylic copolymers (MP1)**

| | Composition [wt%] | Molecular weight Mw [g/mol] | contact angle [°] |
|---|---|---|---|
| Example 1 | MMA/MAA 95/5 | 82 000 | 8-10 |
| Example 2 | MMA/MAA 90/10 | 67 000 | 11-13 |
| Comparative example 1 | MMA/MAA 97/3 | 120 000 | |
| Comparative example 2 | MMA/EA 90/10 | 92 000 | 7-9 |
| Comparative example 3 | MMA/EA 99.5/0.5 | 92 000 | |
| Comparative example 4 | MMA/MA 98/2 | 150 000 | |

The composition in table 1 refers to the monomers units used during polymerization. As explained previously, the methacrylic acid could form anhydrides, so that in the polymeric chain a glutaric anhydride type structure is present, coming from anhydride formation of two initially incorporated methacrylic acid units in the polymeric chain.

Test samples are prepared from the respective composition in form of sheets having a dimension of 100mm*100mm*3mm.

The chemical resistance is tested by spraying 3 times on the surface of the test samples in form of the sheet a liquid composition LC1 consisting of: 70wt% Ethanol, 20% Turpentine and 10% Ethyl phthalate. The surface of sample is evaluated if it has undergone chemical aggression as surface dissolution or cracking as indication of chemical resistance. The resistance is evaluated by cleaning the surface of the sheets either dry or cleaning with the liquid composition LC1 after different exposure times.

Thus there is an evaluation by creating three classes: 1= good resistance; 2 = fair resistance and 3= bad resistance.

Good resistance means that the surface can be easily cleaned by wiping the surface with a tissue only, without using any cleaning solution or solvent. Aesthetics of the surface remains unchanged after the test.

Fair resistance means that the surface can be cleaned by wiping the surface, but with necessity to use additionally a cleaning solution (ex : solvent, perfume, Ethanol) to remove all the deposit. A tissue only is not sufficient to clean by wiping. The aesthetics of the surface remains unchanged after the test.

Bad resistance, it means that the surface of the object is damaged (dissolution and/or cracking), which is not reversible.

**Table 2 - test results of sheets cleaned with LC1**

| | Exposure time [h] | | |
|---|---|---|---|
| | 0.5 | 6 | 24 |
| Example 1 | 1 | 1 | 2 |
| Example 2 | 1 | 1 | 1 |
| Comparative example 1 | | | |
| Comparative example 2 | 3 | 3 | 3 |
| Comparative example 3 | 2 | 3 | 3 |
| Comparative example 4 | 1 | 2 | 3 |

**Table 3 - test results of sheets dry cleaned**

| | Exposure time [h] | | |
|---|---|---|---|
| | 0.5 | 6 | 24 |
| Example 1 | 1 | 2 | 3 |
| Example 2 | 1 | 1 | 2 |
| Comparative example 1 | | | |
| Comparative example 2 | 3 | 3 | 3 |
| Comparative example 3 | 2 | 3 | 3 |
| Comparative example 4 | 2 | 3 | 3 |

The sample according to the invention has a better chemical resistance.

## Claims

1. A polymeric composition (PC1) suitable for making moulded objects that resists to chemicals, said composition comprises a (meth)acrylic copolymer (MP1) comprising monomers of methyl methacrylate and methacrylic acid,
**characterized in that**
the ratio of the monomeric units coming from methacrylic acid in said (meth)acrylic copolymer (MP1) is between 6.5wt% and 14wt%,
wherein a weight average molecular weight Mw of the (meth)acrylic copolymer (MP1) is between 60 000 g/mol and 100 000 g/mol, wherein the weight average molecular weight Mw is determined as described in the specification.

2. The polymeric composition (PC1) according to claim 1, **characterized in that** the polymeric composition comprises at least 99wt% of the (meth)acrylic copolymer (MP1).

3. The polymeric composition (PC1) according to claim 1 or 2, **characterized in that** (meth)acrylic copolymer (MP1) comprises at least 80wt% of methyl methacrylate and more preferably at least 85wt% of methyl methacrylate.

4. The polymeric composition (PC1) according to any of claims 1 to 3, **characterized in that** (meth)acrylic copolymer (MP1) comprises anhydride units, the ratio of said anhydride units in said (meth)acrylic copolymer (MP1) is between 0.1wt% and 14wt%, preferably wherein
the ratio of said anhydride units in said (meth)acrylic copolymer (MP1) is between 0.5wt% and 14wt%.

5. The polymeric composition (PC1) according to any of claims 1 to 4, **characterized in that** (meth)acrylic copolymer (MP1) has a contact angle of at least 8°, preferably
a contact angle between 8° and 20°, wherein the contact angle is determined as described in the specification.

6. A process for making a moulded object by transforming a polymeric composition (PC1) suitable for said composition comprising a (meth)acrylic copolymer (MP1) comprising monomers of methyl methacrylate and methacrylic acid, said process comprises the steps of
a) providing a polymeric composition (PC1) according to any of claims 1 to 5
b) transforming polymeric composition (PC1)
c) assembling.

7. The process according to claim 6, **characterized in that** the polymeric composition (PC1) is transformed by injection molding, extrusion, coextrusion or extrusion/blow molding.

8. The process according to claim 6, **characterized in that** the process comprises the steps of
- melting the polymeric composition (PC1) comprising a (meth)acrylic copolymer (MP1)
- injecting or extruding the molten composition.

9. The process according to claim 6, **characterized in that** the process comprises the steps of
- melting the polymeric composition (PC1) comprising a (meth)acrylic copolymer (MP1)
- injecting the molten composition into a mould
- applying pressure to the mould at least until the mould is completely filled with the molten composition.

10. Use of the polymeric composition (PC1) according to any of claims 1 to 5 for making a moulded object, preferably
a moulded object with increased chemical resistance.

11. Use of the polymeric composition (PC1) according to any of claims 1 to 5 for point of sales.

12. A moulded object comprising the composition according to claims 1 to 5 or obtained by a process according to claims 6 to 9 in form of a sheet, block, film, tube or profiled element.

13. A moulded object comprising the composition according to claims 1 to 5 or obtained by a process according to claims 6 to 9, said moulded object is chosen from multilayer structures comprising a capstock layers, containers and point of sales.

14. A moulded object comprising the composition according to claims 1 to 5 or obtained by a process according to claims 6 to 9, said moulded object is chosen display stands, notably cosmetic display stands; point of purchase displays, sign holders, boxes, risers, racks or showcases; cosmetic packaging.

15. A moulded object in form of an assembled display stand made of a polymeric composition (PC1) according to claims 1 to 5.

## Patentansprüche

1. Polymerzusammensetzung (PC1), die zur Herstellung von geformten Gegenständen geeignet ist, die gegen Chemikalien beständig sind, wobei die Zusammensetzung ein (Meth)acrylcopolymer (MP1) umfasst, das Monomere von Methylmethacrylat und Methacrylsäure umfasst,
**dadurch gekennzeichnet, dass**
der Anteil der von Methacrylsäure stammenden Monomereinheiten in dem (Meth)acrylcopolymer (MP1) zwischen 6,5 Gew.-% und 14 Gew.-% liegt,
wobei ein gewichtsmittleres Molekulargewicht Mw des (Meth)acrylcopolymers (MP1) zwischen 60 000 g/mol und 100 000 g/mol liegt, wobei das gewichtsmittlere Molekulargewicht Mw wie in der Beschreibung beschrieben bestimmt wird.

2. Polymerzusammensetzung (PC1) nach Anspruch 1, **dadurch gekennzeichnet, dass** die Polymerzusammensetzung mindestens 99 Gew.-% des (Meth)acrylcopolymers (MP1) umfasst.

3. Polymerzusammensetzung (PC1) nach Anspruch 1 oder 2, **dadurch gekennzeichnet, dass** das (Meth)acrylcopolymer (MP1) mindestens 80 Gew.-% Methylmethacrylat und vorzugsweise mindestens 85 Gew.-% Methylmethacrylat umfasst.

4. Polymerzusammensetzung (PC1) nach einem der Ansprüche 1 bis 3, **dadurch gekennzeichnet, daß** das (Meth)acrylcopolymer (MP1) Anhydrideinheiten umfaßt, wobei der Anteil der Anhydrideinheiten in dem (Meth)acrylcopolymer (MP1) zwischen 0,1 Gew.-% und 14 Gew.-% liegt, vorzugsweise wobei
der Anteil der Anhydrideinheiten in dem (Meth)acrylcopolymer (MP1) zwischen 0,5 Gew.-% und 14 Gew.-% liegt.

5. Polymerzusammensetzung (PC1) nach einem der Ansprüche 1 bis 4, **dadurch gekennzeichnet, dass** das (Meth)acrylcopolymer (MP1) einen Kontaktwinkel von mindestens 8°, vorzugsweise
einen Kontaktwinkel zwischen 8° und 20°, aufweist, wobei der Kontaktwinkel wie in der Beschreibung beschrieben bestimmt wird.

6. Verfahren zur Herstellung eines geformten Gegenstandes durch Umwandlung einer Polymerzusammensetzung (PC1), die für die Zusammensetzung geeignet ist, die ein (Meth)acrylcopolymer (MP1) umfasst, das Monomere von Methylmethacrylat und Methacrylsäure umfasst, wobei das Verfahren die folgenden Schritte umfasst
a) Bereitstellen einer Polymerzusammensetzung (PC1) nach einem der Ansprüche 1 bis 5
b) Umwandeln der Polymerzusammensetzung (PC1)
c) Zusammensetzen.

7. Verfahren nach Anspruch 6, **dadurch gekennzeichnet, dass** die Polymerzusammensetzung (PC1) durch Spritzgießen, Extrusion, Coextrusion oder Extrusions-/Blasformen umgewandelt wird.

8. Verfahren nach Anspruch 6, **dadurch gekennzeichnet, dass** das Verfahren die folgenden Schritte umfasst
- Schmelzen der Polymerzusammensetzung (PC1), die ein (Meth)acrylcopolymer (MP1) umfasst
- Einspritzen oder Extrudieren der geschmolzenen Zusammensetzung.

9. Verfahren nach Anspruch 6, **dadurch gekennzeichnet, dass** das Verfahren die folgenden Schritte umfasst
- Schmelzen der Polymerzusammensetzung (PC1), die ein (Meth)acrylcopolymer (MP1) umfasst
- Einspritzen der geschmolzenen Zusammensetzung in eine Form
- Ausüben von Druck auf die Form, mindestens bis die Form vollständig mit der geschmolzenen Zusammensetzung gefüllt ist.

10. Verwendung der Polymerzusammensetzung (PC1) nach einem der Ansprüche 1 bis 5 zur Herstellung eines geformten Gegenstandes, vorzugsweise
eines geformten Gegenstands mit erhöhter chemischer Beständigkeit.

11. Verwendung der Polymerzusammensetzung (PC1) nach einem der Ansprüche 1 bis 5 für Verkaufsstellen.

12. Geformter Gegenstand, der die Zusammensetzung nach einem der Ansprüche 1 bis 5 enthält oder durch ein Verfahren nach einem der Ansprüche 6 bis 9 in Form einer Platte, eines Blocks, einer Folie, eines Rohrs oder eines Profilelements erhalten ist.

13. Geformter Gegenstand, der die Zusammensetzung nach einem der Ansprüche 1 bis 5 umfasst oder durch ein Verfahren nach einem der Ansprüche 6 bis 9 erhalten ist, wobei der geformte Gegenstand aus mehrschichtigen Strukturen ausgewählt ist, die Deckschichten, Behälter und Verkaufsstellen umfassen.

14. Geformter Gegenstand, der die Zusammensetzung nach einem der Ansprüche 1 bis 5 umfasst oder durch ein Verfahren nach einem der Ansprüche 6 bis 9 erhalten ist, wobei der geformte Gegenstand ausgewählt ist aus Präsentationsständern, insbesondere kosmetischen Präsentationsständern; Verkaufsstellenanzeigen, Schilderhaltern, Kästen, Steigern, Gestellen oder Vitrinen; Kosmetikverpackungen.

15. Geformter Gegenstand in Form eines zusammengesetzten Präsentationsständers hergestellt aus einer Polymerzusammensetzung (PC1) nach einem der Ansprüche 1 bis 5.

## Revendications

1. Composition polymérique (PC1) appropriée pour la fabrication d'objets moulés et qui résiste aux produits chimiques, ladite composition comprenant un copolymère (méth)acrylique (MP1) comprenant des monomères de méthacrylate de méthyle et d'acide méthacrylique,
**caractérisée en ce que**
le rapport des motifs monomériques provenant de l'acide méthacrylique dans ledit copolymère (méth)acrylique (MP1) est compris entre 6,5 % en poids et 14 % en poids, et
le poids moléculaire moyen en poids Mw du copolymère (méth)acrylique (MP1) est compris entre 60 000 g/mol et 100 000 g/mol, le poids moléculaire moyen en poids Mw étant déterminé de la manière décrite dans la description.

2. Composition polymérique (PC1) selon la revendication 1, **caractérisée en ce que** la composition polymérique comprend au moins 99 % en poids du copolymère (méth)acrylique (MP1).

3. Composition polymérique (PC1) selon la revendication 1 ou 2, **caractérisée en ce que** le copolymère (méth)acrylique (MP1) comprend au moins 80 % en poids de méthacrylate de méthyle et plus préférablement au moins 85 % en poids de méthacrylate de méthyle.

4. Composition polymérique (PC1) selon l'une quelconque des revendications 1 à 3, **caractérisée en ce que** le copolymère (méth)acrylique (MP1) comprend des unités anhydrides, le rapport desdits motifs anhydride dans ledit copolymère (méth)acrylique (MP1) étant compris entre 0,1 % en poids et 14 % en poids,
le rapport desdits motifs anhydride dans ledit copolymère (méth)acrylique (MP1) étant de préférence compris entre 0,5 % en poids et 14 % en poids.

5. Composition polymérique (PC1) selon l'une quelconque des revendications 1 à 4, **caractérisée en ce que** le copolymère (méth)acrylique (MP1) possède un angle de contact d'au moins 8 °, de préférence un angle de contact compris entre 8 ° et 20 °, l'angle de contact étant déterminé de la manière décrite dans la description.

6. Procédé pour la fabrication d'un objet moulé par transformation d'une composition polymérique (PC1), appropriée à ladite composition, comprenant un copolymère (méth)acrylique (MP1) comprenant des monomères de méthacrylate de méthyle et d'acide méthacrylique, ledit procédé comprenant les étapes de
a) mise à disposition d'une composition polymérique (PC1) selon l'une quelconque des revendications 1 à 5
b) transformation de la composition polymérique (PC1)
c) assemblage.

7. Procédé selon la revendication 6, **caractérisé en ce que** la composition polymérique (PC1) est transformée par moulage par injection, par extrusion, par coextrusion ou par extrusion/soufflage.

8. Procédé selon la revendication 6, **caractérisé en ce que** le procédé comprend les étapes de
- fusion de la composition polymérique (PC1) comprenant un copolymère (méth)acrylique (MP1)
- injection ou extrusion de la composition fondue.

9. Procédé selon la revendication 6, **caractérisé en ce que** le procédé comprend les étapes de
- fusion de la composition polymérique (PC1) comprenant un copolymère (méth)acrylique (MP1)
- injection de la composition fondue dans un moule
- application de pression au moule au moins jusqu'à ce que le moule soit complètement rempli de la composition fondue.

10. Utilisation de la composition polymérique (PC1) selon l'une quelconque des revendications 1 à 5 pour la fabrication de
un objet moulé, de préférence
un objet moulé doté d'une résistance chimique accrue.

11. Utilisation de la composition polymérique (PC1) selon l'une quelconque des revendications 1 à 5 pour un point de vente.

12. Objet moulé comprenant la composition selon les revendications 1 à 5 ou obtenu par un procédé selon les revendications 6 à 9 sous forme de feuille, bloc, film, tube ou élément profilé.

13. Objet moulé comprenant la composition selon les revendications 1 à 5 ou obtenu par un procédé selon les revendications 6 à 9, ledit objet moulé étant choisi parmi des structures multicouches comprenant des couches de protection, des récipients et un point de vente.

14. Objet moulé comprenant la composition selon les revendications 1 à 5 ou obtenu par un procédé selon les revendications 6 à 9, ledit objet moulé étant choisi parmi des présentoirs, notamment des présentoirs cosmétiques, des présentoirs de point d'achat, des porte-panneaux, des boîtes, des élévateurs, des supports ou des vitrines, un emballage cosmétique.

15. Objet moulé sous forme d'un présentoir assemblé, fabriqué avec une composition polymérique (PC1) selon les revendications 1 à 5.
